# EUROPÄISCHE PATENTSCHRIFT

(11) **EP 1 425 195 B1**
(45) Veröffentlichungstag und Bekanntmachung des Hinweises auf die Patenterteilung: **23.01.2008**
(21) Anmeldenummer: 02797926.9
(22) Anmeldetag: 27.08.2002
(51) Int. Cl.: B60J 7/02

(54) **FÜHRUNGSANORDNUNG FÜR EIN DACHELEMENT EINES ÖFFNUNGSFÄHIGEN FAHRZEUGDACHES**
GUIDE ARRANGEMENT FOR A ROOF ELEMENT ON AN OPENING VEHICLE ROOF
ENSEMBLE DE GUIDAGE POUR ELEMENT D'UN TOIT OUVRANT DE VEHICULE

(30) Priorität: 11.09.2001 DE 10144756
(43) Veröffentlichungstag der Anmeldung: 09.06.2004
(73) Patentinhaber: Webasto AG, 82131 Stockdorf (DE)
(72) Erfinder: HANKE, Michael, 82049 Pullach (DE)
(74) Vertreter: Konnerth, Dieter Hans
(86) Internationale Anmeldenummer: PCT/EP2002/009552
(87) Internationale Veröffentlichungsnummer: WO 2003/022613

(56) Entgegenhaltungen:
- EP-A- 1 070 614
- DE-A- 19 514 585
- NL-A- 6 807 210

## Beschreibung

Die vorliegende Erfindung betrifft eine Führungsanordnung für ein Dachelement gemäß dem Oberbegriff des Anspruchs 1 sowie des Anspruchs 2.

Aus der EP 1 070 614 A1 ist eine gattungsgemäße Führungsanordnung bekannt geworden, bei der eine Führungsklaue eine Führungsausnehmung aufweist, in der ein Führungssteg verschiebbar aufgenommen ist. In der Führungsklaue ist ein elastisches Element in Gestalt eines Federelementes angeordnet, das die untere Führungsfläche für den Führungssteg bildet und dessen konvexer Abschnitt gegen den Führungssteg drückt, so dass ein Spiel zwischen der Führungsklaue und dem Führungssteg ausgeglichen wird. Das elastische Element ist in Gleitkontakt mit dem Führungssteg. Um seine Stützfunktion ausführen zu können, muss das elastische Element mit deutlicher Kraft gegen den Führungssteg drücken. Dadurch wird jedoch die Gleitreibungskraft zwischen dem elastischen Element und dem Führungssteg wesentlich erhöht.

Eine weitere Führungsanordnung ist aus der DE 195 14 585 A1 bekannt, wobei ein T-förmiger Führungssteg an der Unterseite eines an einem Dachdeckel befestigten Befestigungselements ausgebildet ist und wobei die beiden Führungsflächen von einem ersten Nocken und einem bezüglich des ersten Nockens in Längsrichtung versetzten Widerlagernocken gebildet werden. Die Führungsklaue kann einstückig aus Kunststoff ausgebildet sein und ist in Dachlängsrichtung entlang einer dachfesten Führungsschiene verschiebbar geführt.

Aus der DE 100 24 442 C1 sowie der US-A-2 968 514 und der US-A-3 005 226 ist es bekannt, einen Deckel eines öffnungsfähigen Fahrzeugdaches mittels an dem Deckel befestigten Führungsschuhen entlang einer dachfesten Führungsschiene zu führen, wobei jeder Führungsschuh einen waagrecht hervorspringenden Steg in U-förmiger Weise umgreift, wobei der Führungsschuh im Eingriffsbereich mit einer flexiblen Auskleidung bzw. einem Kunststoffelement versehen ist.

Bei einer Schlitzführung, bei der ein Kulissenstift in einem Kulissenschlitz verschiebbar geführt ist, kann ein Toleranzausgleich dadurch erzielt werden, dass der Kulissenstift und der Kulissenschlitz mit einer Überschneidung ausgelegt werden, wobei sich die Schlitzbreite auf den Stiftdurchmesser aufweitet. Dies ist möglich, weil der Schlitz relativ lang ist und deshalb das Material, welches den Schlitz umgibt, als Feder wirkt. Bei einer Stegführung (z.B. T-Führung) lässt sich diese Art des Toleranzausgleichs nicht realisieren, weil der Steg nicht als federndes Element genutzt werden kann. Dadurch kann das Problem entstehen, dass entweder die Stegführung oder die Führungsklaue klappert, weil die Breite des Stegs kleiner als der Abstand der Halteklauen ist. Andererseits kann auch das Problem auftreten, dass die beiden Teile klemmen oder sich nur unter großem Kraftaufwand bewegen lassen, wobei in diesem Fall der Verschleiß der Anlageflächen sehr groß ist und nach einer gewissen Anzahl von Betätigungen ein Klappern der Teile auftreten kann.

Es ist Aufgabe der vorliegenden Erfindung, eine Führung für einen Führungssteg zu schaffen, bei welcher auf einfache und zweckmäßige Weise ein guter Toleranzausgleich erzielt werden kann, um sowohl ein Klappern als auch eine Schwergängigkeit bzw. einen übermäßigen Verschleiß zu verhindern.

Diese Aufgabe wird erfindungsgemäß durch eine Führungsanordnung mit den Merkmalen des Anspruchs 1 sowie mit den Merkmalen des Anspruchs 2 gelöst.

Bei diesen erfindungsgemäßen Lösungen ist vorteilhaft, dass dadurch, dass die Führungsklaue mit einem elastischen Element versehen ist, der Abstand zwischen den beiden Führungsflächen der Führungsklaue zwecks Toleranzausgleich veränderbar gestaltet wird.

Bevorzugte Ausgestaltungen der Erfindung ergeben sich aus den Unteransprüchen.

Im folgenden wird die Erfindung anhand der beigefügten Zeichnungen beispielhaft näher erläutert. Dabei zeigen:
- FIG. 1: eine schematische perspektivische Ansicht einer erfindungsgemäßen Führungsanordnung gemäß einer ersten Ausführungsform;

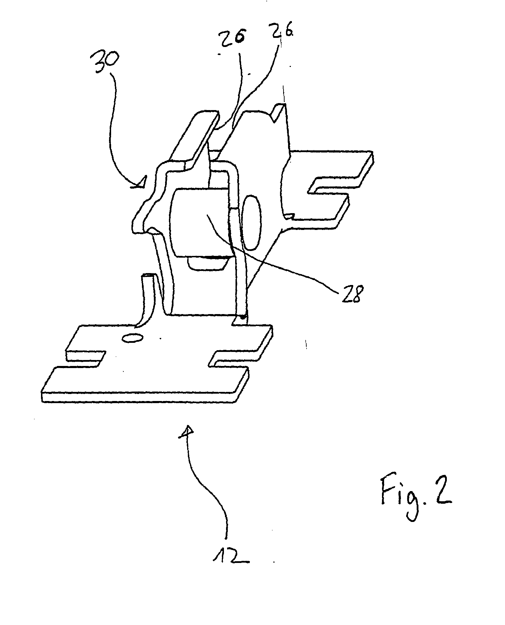

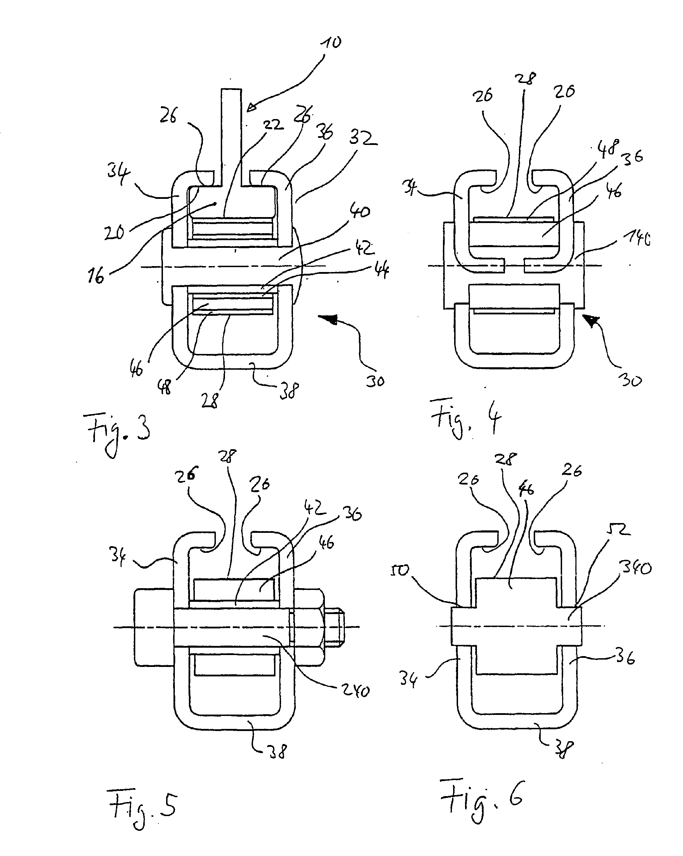

- FIG. 2: eine perspektivische Ansicht der Führungsklaue von FIG. 1;
- FIG. 3: einen Querschnitt durch die Führungsanordnung von FIG. 1 und 2;
- FIGN. 4 bis 7: Ansichten wie FIG. 3, wobei jedoch abgewandelte Ausführungsformen der Erfindung dargestellt sind;
- FIG. 8: eine Seitenansicht einer Führungsklaue gemäß einer weiteren abgewandelten Ausführungsform der Erfindung;
- FIG. 9: eine Ansicht wie FIG. 3, wobei jedoch eine abgewandelte Ausführungsform der Erfindung dargestellt ist; und
- FIG. 10: einen Schnitt entlang der Linie X-X von FIG. 9, wobei jedoch der Führungssteg weggelassen ist.

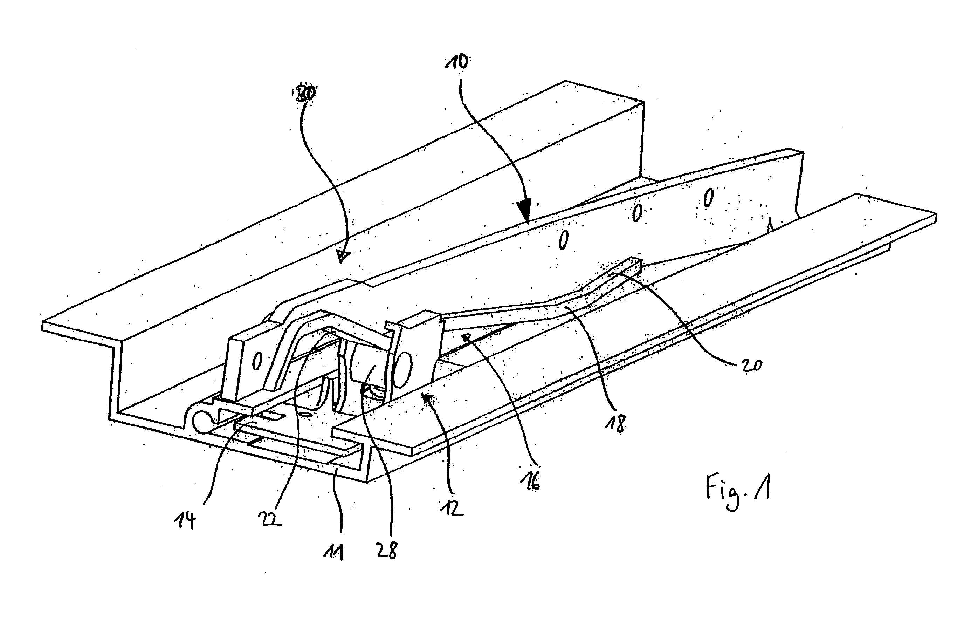

In FIG. 1 ist eine Führungsanordnung mit einem Trägerelement 10 und einem Gleitelement 12 in schematischer Weise perspektivisch gezeigt. Das Trägerelement 10 ist zur festen Anbringung an der Unterseite eines Deckels (nicht gezeigt) vorgesehen, welcher zum Verschließen bzw. wahlweisen Freigeben einer in einem Fahrzeugdach gebildeten Dachöffnung vorgesehen ist. Dabei kann es sich beispielsweise um ein Schiebedach, Schiebehebedach oder Spoilerdach handeln. Das Gleitelement 12 ist vorgesehen, um mittels des Eingriffs von (nicht gezeigten) Gleitschuhen, welche an Gleitschuhabschnitten 14 an dem Gleitelement 12 befestigt werden können, in einer karosseriefesten Führungsschiene 11 in Dachlängsrichtung verschiebbar geführt zu sein. Das Gleitelement 12 kann dabei von einem drucksteifen Antriebskabel angetrieben sein.

Das Trägerelement 10 ist an seiner Unterseite mit einem im Querschnitt T-förmigen Führungssteg 16 versehen, d.h. zu beiden Seiten des Trägerelements 10 steht ein Abschnitt 18 des Führungsstegs 16 seitlich hervor. Die Abschnitte 18 weisen an ihrer Oberseite 20 bzw. ihrer Unterseite 22 jeweils eine Anlagefläche auf, welche mit entsprechenden oberen bzw. unteren Anlageflächen 26 bzw. 28, die an einem als Führungsklaue 30 ausgebildeten Abschnitt des Gleitelements 12 vorgesehen sind, gleitend anliegen. Die Klaue 30 umgreift auf diese Weise den Führungssteg 16.

Der Führungssteg 16 ist so ausgebildet, dass er in Dachhochrichtung auf unterschiedlichem Niveau verläuft. Auf diese Weise kann, wenn die Führungsklaue 30 bezüglich des Trägerelements 10 in Längsrichtung verschoben wird, eine Ausstell- bzw. Schwenkbewegung des Trägerelements 10 und damit des daran befestigten Deckels veranlasst und gesteuert werden.

Das Trägerelement 10 kann beispielsweise als Blechteil gefertigt sein, wobei der Führungssteg 16 beispielsweise mit POM umspritzt sein kann. Es kann jedoch auch das gesamte Trägerelement 10 aus Kunststoff bestehen, z.B. POM.

Im folgenden wird der Aufbau der Führungsklaue 30 in mehreren Ausführungsformen detaillierter beschrieben.

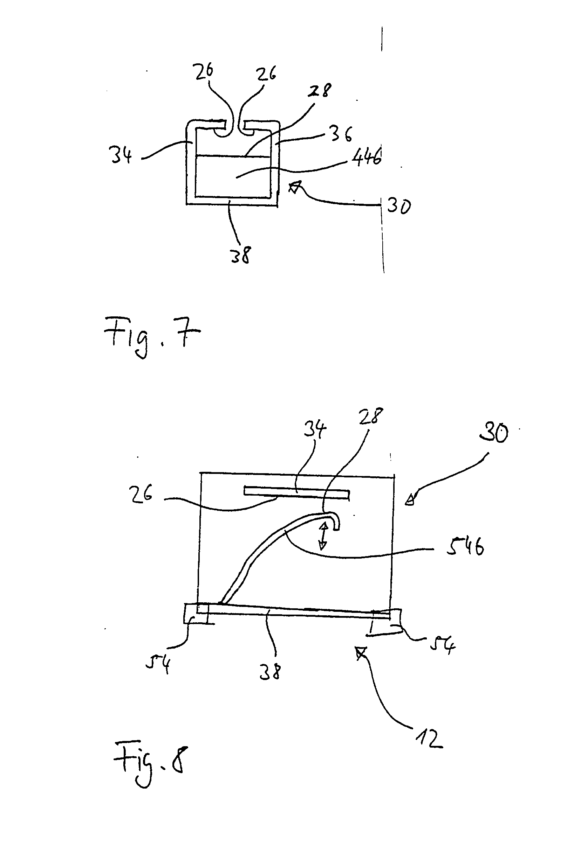

Bei der Ausführungsform gemäß FIG. 3 umfasst die Führungsklaue 30 ein Profil 32, welches zwei Seitenwände 34 bzw. 36 sowie einen Boden 38 umfasst. Die Wände 32 und 34 sind in ihrem oberen Abschnitt nach innen gebogen, um an der Unterseite des nach innen gebogenen Abschnitts die obere, feste Anlagefläche 26 der Klaue 30 zu bilden. Eine Achse 40 ist mittels entsprechenden Bohrungen in Querrichtung zwischen den beiden Wänden 34 und 36 befestigt und wird von einem Niet gebildet. Der Niet 40 wird von einer Abstandshülse 42 umgeben, welche wiederum von einer Drehhülse 44 umgeben wird. Die eingenietete Abstandshülse 42 dient dazu, die Wände 34 bzw. 36 des Profils 32 zu stabilisieren und damit die gesamte Klaue 30 zu stabilisieren. Der Niet 40, die Abstandshülse 42 und die beiden Wände 34 und 36 sind form- und kraftschlüssig miteinander verbunden.

Die Drehhülse 44 wird von einem hülsenartig ausgebildeten elastischen Element 46 aus elastischem Material umgeben, welches seinerseits von einer Gleithülse 48 umgeben wird. Die Gleithülse 48 bildet die untere Anlagefläche 28 der Klaue 30, welche in Eingriff mit der unteren Anlagefläche 22 des Führungsstegs 16 steht. Die Drehhülse 44 dient dazu, das elastische Element 46 und die Gleithülse 48 drehbar bezüglich des Niets 40 bzw. der Abstandshülse 42 zu lagern, wodurch beim Eingriff der Klaue 30 mit dem Führungssteg 16 die Gleitreibung im wesentlichen in eine Rollreibung umgewandelt wird. Auf diese Weise können die erforderlichen Antriebskräfte und der Verschleiß deutlich verringert werden.

Da sich das elastische Element 46 zusammendrücken lässt, lässt sich die Drehachse der Gleithülse 48 bezüglich der Drehachse der Drehhülse 44 verschieben, wodurch sich die einander gegenüberliegenden Anlageflächen 28 und 26 der Klaue 30 verschieben lassen, um Fertigungstoleranzen beim Führungssteg 16 bzw. der Führungsklaue 30 auszugleichen, so dass sowohl eine Schwergängigkeit als auch ein zu großes Spiel zuverlässig verhindert werden können.

Bei der Ausführungsform gemäß FIG. 4 ist die Drehhülse 44 weggelassen, was möglich ist, wenn das elastische Element 46 direkt auf der Achse 140 gleitet oder wenn auf die Drehbarkeit der Anlagefläche 22 bzw. der Gleithülse 28 verzichtet werden kann. Bei der Ausführungsform gemäß FIG. 4 ist die Achse 140 in die Klaue 30 eingespritzt.

Bei der Ausführungsform gemäß FIG. 5 ist die Gleithülse 48 weggelassen, was möglich ist, wenn der Werkstoff des elastischen Elements 46 mit dem Werkstoff des Führungsstegs 16 in günstiger Weise zusammenwirkt, um die Reibung und damit den Verschleiß gering zu halten. Die Anlagefläche 28 ist dabei direkt an der Außenseite des elastischen Elements 46 ausgebildet. Die Achse 240 ist bei der Ausführungsform gemäß FIG. 5 als Schraubenachse ausgeführt.

Bei der Ausführungsform gemäß FIG. 6 ist die Achse 340 einstückig mit dem elastischen Element 46 ausgebildet, wobei die Achse 340 in den Bohrungen 50 bzw. 52 in den Wänden 34 bzw. 36 drehbar gelagert sein kann. Alternativ kann die Achse 340 mit einer oder beiden Wänden 34, 36 fest verbunden sein, wenn auf die Drehbarkeit der Anlagefläche 28 verzichtet werden kann.

In den FIG. 9 und 10 ist eine Ausführungsform gezeigt, bei welcher sowohl die Abstandshülse als auch die Drehhülse weggelassen sind. Das elastische Element 46 besteht aus Gummi und umgibt einen als Niet ausgebildeten Bolzen 40, wobei das elastische Element 46 an der Fläche 47 auf dem Bolzen 40 drehbar ist. Das elastische Element 46 trägt an seinem Außenumfang eine Gleithülse 48 aus härterem Material, welche die Anlagefläche 28 bildet. Der Eingriff des Bolzens 40 verhindert, dass sich die beiden Seitenwände 34, 36 auseinander bewegen können. Die Gleithülse 48 verhindert, dass sich die beiden Seitenwände 34, 36 weiter nach innen aufeinander zu bewegen können, als es der Breite der Gleithülse 48 entspricht.

Die Achse kann, wie gezeigt, beispielsweise als Niet oder als Schraube ausgebildet sein, wobei Niet und Abstandshülse auch durch einen eingepressten Bolzen ersetzt werden können. Die Anlagefläche 28 ist, wenn sie um die Achse drehbar ist, zweckmäßigerweise als Kreiszylinder- bzw. Walzenfläche ausgebildet; wenn auf die Drehbarkeit verzichtet werden kann, kann die Anlagefläche 28 auch eine andere Form annehmen.

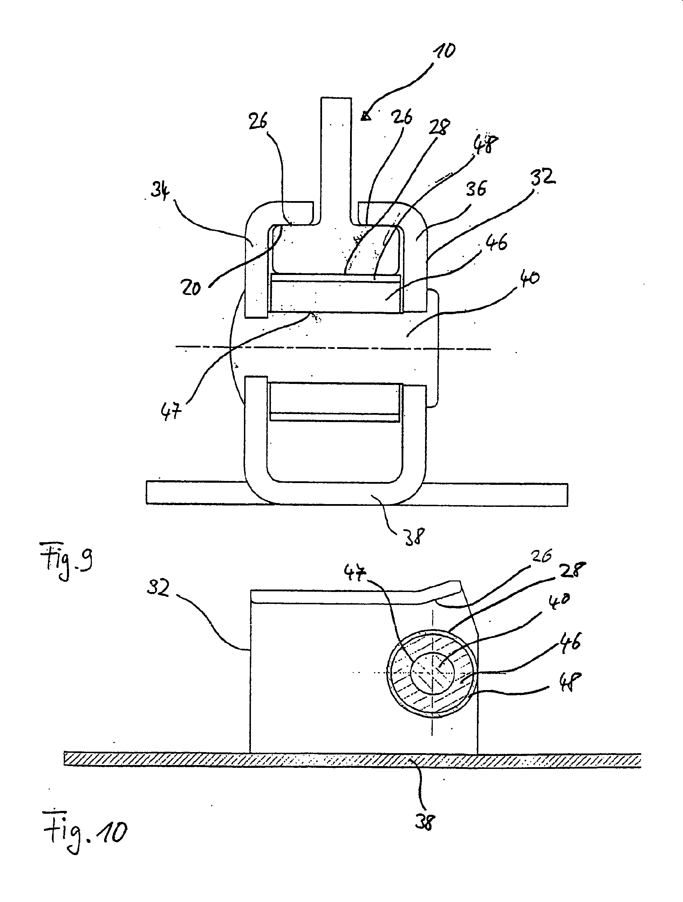

In FIG. 7 ist eine abgewandelte Ausführungsform gezeigt, bei welcher oberhalb des Bodens 38 der Führungsklaue 30 das elastische Element 446 als Block aus elastischem Material vorgesehen ist und die Anlagefläche 28 bildet. Das elastische Element 446 wird dabei von dem Boden 38 der Führungsklaue 30 abgestützt.

Bei den bisher beschriebenen Ausführungsformen wird das elastische Element 46, 446 vorzugsweise von einem geeigneten Kunststoffmaterial oder Gummi gebildet.

In FIG. 8 ist eine Ausführungsform dargestellt, bei welcher das elastische Element 546 von einer in der mit Pfeilen angedeuteten Richtung nachgiebigen Feder gebildet wird, welche an ihrer Oberseite die untere Anlagefläche 28 bildet, welche der oberen Anlagefläche 26 gegenüberliegt. In FIG. 8 sind ferner Gleitschuhe 54 für das Gleitelement 12 angedeutet.

Bei allen Ausführungsformen ist der Führungssteg nicht auf die beschriebene T-förmige Querschnittsform beschränkt. Statt dessen kann er beispielsweise auch eine L-förmige Querschnittsform aufweisen.

### Bezugszeichenliste

- 10: Trägerelement
- 11: karosseriefeste Führungsschiene
- 12: Gleitelement
- 14: Gleitschuhabschnitt
- 16: Führungssteg
- 18: Abschnitt von 16
- 20: obere Anlagefläche von 16
- 22: untere Anlagefläche von 16
- 26: obere Anlagefläche von 30
- 28: untere Anlagefläche von 30
- 30: Führungsklaue
- 32: Profil
- 34, 36: Seitenwände von 32
- 38: Boden von 32
- 40,140,240,340: Achse
- 42: Abstandshülse
- 44: Drehhülse
- 46, 446, 546: elastisches Element
- 47: Drehfläche
- 48: Gleithülse
- 50, 52: Bohrungen
- 54: Gleitschuhe

## Patentansprüche

1. Führungsanordnung für ein Dachelement eines öffnungsfähigen Fahrzeugdaches, mit einem mit dem Dachelement verbundenen Führungssteg (16) und einer mit zwei einander gegenüber liegenden Führungsflächen (26, 28) versehenen Führungsklaue (30), welche den Führungssteg (16) derart umgreift, dass die Führungsflächen (26, 28) an dem Führungssteg (16) anliegen,
wobei die Führungsklaue (30) ein elastisches Element (46) aufweist, welches dafür sorgt, dass eine (28) der beiden Führungsflächen (26, 28) verstellbar ist und dass somit der Abstand zwischen den beiden Führungsflächen (26, 28) zwecks Toleranzausgleich veränderbar ist, und
wobei die Führungsklaue (30) als Profil (32) ausgebildet ist, welches das elastische Element (46) trägt, wobei die feststehende Führungsfläche (26) von dem Profil (32) gebildet wird,
**dadurch gekennzeichnet,**
**dass** die Führungsklaue (30) eine Achse (40, 140, 240, 340) aufweist, welche das elastische Element (46) trägt.

2. Führungsanordnung für ein Dachelement eines öffnungsfähigen Fahrzeugdaches, mit einem mit dem Dachelement verbundenen Führungssteg (16) und einer mit zwei einander gegenüber liegenden Führungsflächen (26, 28) versehenen Führungsklaue (30), welche den Führungssteg (16) derart umgreift, dass die Führungsflächen (26, 28) an dem Führungssteg (16) anliegen,
wobei die Führungsklaue (30) ein elastisches Element (46) aufweist, welches dafür sorgt, dass eine (28) der beiden Führungsflächen (26, 28) verstellbar ist und dass somit der Abstand zwischen den beiden Führungsflächen (26, 28) zwecks Toleranzausgleich veränderbar ist,
**dadurch gekennzeichnet,**
**dass** die verstellbare Führungsfläche (28) walzen- oder hülsenförmig gebildet und bezüglich der Führungsklaue (30) um eine Achse (40, 140, 240, 340) drehbar gelagert ist.

3. Führungsanordnung nach Anspruch 1 oder 2,
**dadurch gekennzeichnet, dass** der Führungssteg (16) im Schnitt T-förmig oder L-förmig ausgebildet ist.

4. Führungsanordnung nach Anspruch 2 oder 3,
**dadurch gekennzeichnet, dass** die Führungsklaue (30) als Profil (32) ausgebildet ist, welches das elastische Element (46) trägt, wobei die feststehende Führungsfläche (26) von dem Profil (32) gebildet wird_

5. Führungsanordnung nach Anspruch 4,
**dadurch gekennzeichnet, dass** die Führungsklaue (30) als Metallprofil (32) ausgebildet ist.

6. Führungsanordnung nach Anspruch 4 oder 5,
**dadurch gekennzeichnet, dass** die Führungsklaue (30) eine Achse (40, 140, 240, 340) aufweist, welche das elastische Element (46) trägt.

7. Führungsanordnung nach einem der Ansprüche 1 bis 6,
**dadurch gekennzeichnet, dass** die Führungsklaue (30) mit einer Achse (40, 140) versehen ist, auf welcher die verstellbare Führungsfläche (28) drehbar gelagert ist.

8. Führungsanordnung nach Anspruch 7,
**dadurch gekennzeichnet, dass** die Achse (40) mit einer Drehhülse (44) versehen ist, welche als Drehlager für das elastische Element (46) dient, welches die Achse (40) hülsenartig umgibt.

9. Führungsanordnung nach Anspruch 7 oder 8,
**dadurch gekennzeichnet, dass** die Achse von einer Abstandshülse (42) umgeben ist.

10. Führungsanordnung nach einem der Ansprüche 1 bis 6,
**dadurch gekennzeichnet, dass** das elastische Element (46) einstückig mit einer bezüglich der (30) der Führungsklaue (30) drehbar gelagerten Achse (340) ausgebildet ist.

11. Führungsanordnung nach einem der vorgehenden Ansprüche,
**dadurch gekennzeichnet, dass** das elastische Element (46) auf einer Seite mit einer Lage (48) versehen ist, welche die verstellbare Führungsfläche (28) bildet.

12. Führungsanordnung nach einem der vorgehenden Ansprüche,
**dadurch gekennzeichnet, dass** die eine Führungsfläche (26) der Führungsklaue (30) eine oben liegende Führungsfläche und die andere Führungsfläche (28) der Klaue (30) eine unten liegende Führungsfläche bildet, wobei die mittels des elastischen Elements (46) verstellbare Führungsfläche die unten liegende Führungsfläche ist.

13. Führungsanordnung nach einem der vorgehenden Ansprüche,
**dadurch gekennzeichnet, dass** der Führungssteg (16) aus POM besteht oder mit POM umspritzt ist.

14. Führungsanordnung nach einem der vorgehenden Ansprüche,
**dadurch gekennzeichnet, dass** es sich bei dem Dachelement um einen Deckel handelt.

15. Führungsanordnung nach einem der vorgehenden Ansprüche,
**dadurch gekennzeichnet, dass** die Führungsklaue (30) in Dachlängsrichtung entlang einer dachfesten Führungsbahn (11) verstellbar ist.

16. Führungsanordnung nach einem der vorgehenden Ansprüche,
**dadurch gekennzeichnet, dass** die Führungsklaue (30) ein Abschnitt eines in Dachlängsrichtung entlang einer dachfesten Führungsbahn (11) verstellbaren Gleitelements (12) ist.

## Claims

1. Guide arrangement for a roof element of an opening vehicle roof, having a guide web (16) connected to a roof element and a guide claw (30) which is provided with two mutually opposite guide surfaces (26, 28) and which engages around the guide web (16) in such a way that the guide surfaces (26, 28) rest on the guide web (16),
the guide claw (30) having an elastic element (46) which ensures that one (28) of the two guide surfaces (26, 28) can be displaced and that the distance between the two guide surfaces (26, 28) can thus be varied for the purpose of tolerance compensation, and
the guide claw (30) being formed as a profile (32) which bears the elastic element (46), the stationary guide surface (26) being formed by the profile (32),
**characterized in that**
the guide claw (30) has an axle (40, 140, 240, 340) which bears the elastic element (46).

2. Guide arrangement for a roof element of an opening vehicle roof, having a guide web (16) connected to the roof element and a guide claw (30) which is provided with two mutually opposite guide surfaces (26, 28) and which engages around the guide web (16) in such a way that the guide surfaces (26, 28) rest on the guide web (16),
the guide claw (30) having an elastic element (46) which ensures that one (28) of the two guide surfaces (26, 28) can be displaced and that the distance between the two guide surfaces (26, 28) can thus be varied for the purpose of tolerance compensation,
**characterized in that**
the displaceable guide surface (28) is formed in the shape of a roll or sleeve and is mounted such that it can be rotated with respect to the guide claw (30) about an axle (40, 140, 240, 340).

3. Guide arrangement according to Claim 1 or 2, **characterized in that** the guide web (16) is T-shaped or L-shaped in cross section

4. Guide arrangement according to Claim 2 or 3, **characterized in that** the guide claw (30) is formed as a profile (32) which bears the elastic element (46), the stationary guide surface (26) being formed by the profile (32).

5. Guide arrangement according to Claim 4, **characterized in that** the guide claw (30) is formed as a metal profile (32).

6. Guide arrangement according to Claim 4 or 5, **characterized in that** the guide claw (30) has an axle (40, 140, 240, 340) which bears the elastic element (46).

7. Guide arrangement according to one of Claims 1 to 6, **characterized in that** the guide claw (30) is provided with an axle (40, 140) on which the displaceable guide surface (28) is mounted such that it can rotate.

8. Guide arrangement according to Claim 7, **characterized in that** the axle (40) is provided with a rotary sleeve (44), which is used as a rotary bearing for the elastic element (46), which surrounds the axle (40) in the manner of a sleeve.

9. Guide arrangement according to Claim 7 or 8, **characterized in that** the axle is surrounded by a spacer sleeve (42).

10. Guide arrangement according to one of Claims 1 to 6, **characterized in that** the elastic element (46) is formed in one piece with an axle (340) that is mounted such that it can rotate with respect to the guide claw (30).

11. Guide arrangement according to one of the preceding claims, **characterized in that** the elastic element (46) is provided on one side with a layer (48) which forms the displaceable guide surface (28).

12. Guide arrangement according to one of the preceding claims, **characterized in that** one guide surface (26) of the guide claw (30) forms the guide surface located at the top and the other guide surface (28) of the claw (30) forms the guide surface located at the bottom, the guide surface that can be displaced by means of the elastic element (46) being the guide surface located at the bottom.

13. Guide arrangement according to one of the preceding claims, **characterized in that** the guide web (16) consists of POM or is encapsulated with POM.

14. Guide arrangement according to one of the preceding claims, **characterized in that** the roof element is a panel.

15. Guide arrangement according to one of the preceding claims, **characterized in that** the guide claw (30) can be displaced in the roof longitudinal direction along a guide track (11) fixed to the roof.

16. Guide arrangement according to one of the preceding claims, **characterized in that** the guide claw (30) is a section of a sliding element (12) which can be displaced in the roof longitudinal direction along a guide track (11) fixed to the roof.

## Revendications

1. Dispositif de guidage pour un élément d'un toit ouvrant de véhicule, comprenant une aile de guidage (16) reliée à l'élément de toit et une mâchoire de guidage (30) dotée de deux surfaces de guidage se faisant face (26, 28), qui entoure l'aile de guidage (16) de telle sorte que les surfaces de guidage (26, 28) sont appliquées contre l'aile de guidage (16), la mâchoire de guidage (30) présentant un élément élastique (46) qui fait en sorte que l'une (28) des deux surfaces de guidage (26, 28) soit mobile, de manière à pouvoir modifier l'écart entre les deux surfaces de guidage (26, 28) pour compenser des tolérances, et la mâchoire de guidage (30) étant réalisée en tant que profilé (32) portant l'élément élastique (46), la surface de guidage (26) fixe étant constituée par ledit profilé (32), **caractérisé en ce que** la mâchoire de guidage (30) présente un axe (40, 140, 240, 340) qui porte l'élément élastique (46).

2. Dispositif de guidage pour un élément d'un toit ouvrant de véhicule, comprenant une aile de guidage (16) reliée à l'élément de toit et une mâchoire de guidage (30) dotée de deux surfaces de guidage se faisant face (26, 28), qui entoure l'aile de guidage (16) de telle sorte que les surfaces de guidage (26, 28) sont appliquées contre l'aile de guidage (16), la mâchoire de guidage (30) présentant un élément élastique (46) qui fait en sorte que l'une (28) des deux surfaces de guidage (26, 28) soit mobile, de manière à pouvoir modifier l'écart entre les deux surfaces de guidage (26, 28) pour compenser des tolérances, **caractérisé en ce que** la surface de guidage (28) mobile a la forme d'un cylindre ou d'un manchon et est montée sur un axe (40, 140, 240, 340) de manière à pouvoir tourner par rapport à la mâchoire de guidage (30).

3. Dispositif de guidage selon la revendication 1 ou 2, **caractérisé en ce que** l'aile de guidage (16) est réalisée avec une section transversale en forme de T ou de L.

4. Dispositif de guidage selon la revendication 2 ou 3, **caractérisé en ce que** la mâchoire de guidage (30) est réalisée en tant que profilé (32) portant l'élément élastique (46), la surface de guidage (26) fixe étant formée par ledit profilé (32).

5. Dispositif de guidage selon la revendication 4, **caractérisé en ce que** la mâchoire de guidage (30) est réalisée en tant que profilé en métal (32).

6. Dispositif de guidage selon la revendication 4 ou 5, **caractérisé en ce que** la mâchoire de guidage (30) présente un axe (40, 140, 240, 340) qui porte l'élément élastique (46).

7. Dispositif de guidage selon l'une des revendications 1 à 6, **caractérisé en ce que** la mâchoire de guidage (30) est dotée d'un axe (40, 140) sur lequel la surface de guidage (28) mobile est montée de manière rotative.

8. Dispositif de guidage selon la revendication 7, **caractérisé en ce que** l'axe (40) est doté d'une douille rotative (44) faisant office de palier rotatif pour l'élément élastique (46) qui entoure l'axe (40) à la manière d'un manchon.

9. Dispositif de guidage selon la revendication 7 ou 8, **caractérisé en ce que** l'axe est entouré d'une douille d'écartement (42).

10. Dispositif de guidage selon l'une des revendications 1 à 6, **caractérisé en ce que** l'élément élastique (46) fait corps avec un axe (340) monté de façon à tourner par rapport à la mâchoire de guidage (30).

11. Dispositif de guidage selon l'une des revendications précédentes, **caractérisé en ce que** l'élément élastique (46) porte d'un côté une couche (48) formant la surface de guidage (28) mobile.

12. Dispositif de guidage selon l'une des revendications précédentes, **caractérisé en ce que** l'une (26) des surfaces de guidage de la mâchoire de guidage (30) forme une surface de guidage située en haut, et l'autre surface de guidage (28) de la mâchoire de guidage (30) une surface de guidage située en bas, la surface de guidage pouvant être déplacée à l'aide de l'élément élastique (46) constituant la surface de guidage située en bas.

13. Dispositif de guidage selon l'une des revendications précédentes, **caractérisé en ce que** l'aile de guidage (16) est composée de POM ou est enrobée de POM par injection.

14. Dispositif de guidage selon l'une des revendications précédentes, **caractérisé en ce que** l'élément de toit est un panneau d'obturation.

15. Dispositif de guidage selon l'une des revendications précédentes, **caractérisé en ce que** la mâchoire de guidage (30) est mobile dans la direction longitudinale du toit, le long d'une glissière de guidage (11) solidaire du toit.

16. Dispositif de guidage selon l'une des revendications précédentes, **caractérisé en ce que** la mâchoire de guidage (30) constitue une partie d'un élément coulissant (12) mobile dans la direction longitudinale du toit, le long d'une glissière de guidage (11) solidaire du toit.
